# EUROPEAN PATENT APPLICATION

(11) **EP 4 759 577 A1**
(43) Date of publication of application: **17.06.2026**
(21) Application number: 25220532.3
(22) Date of filing: 03.12.2025
(51) Int. Cl.: B60H 1/00, B60H 1/32

(54) **TRANSPORTATION REFRIGERATION UNIT CONFIGURED TO CONSERVE ENERGY UTILIZED FOR COMPRESSOR CYCLES AFTER A DEFROST EVENT**

(30) Priority: 13.12.2024 US 202463733618 P
(71) Applicant: Carrier Corporation, Palm Beach Gardens, FL 33418 (US)
(72) Inventor: BEAUFRERE, Florian, 76520 Franqueville Saint Pierre (FR)
(74) Representative: Dehns

(57) **Abstract**

A transportation refrigeration system (100), having: a cargo box (120) extending from a front end (130) to an aft end (140); a transportation refrigeration unit (TRU) (150) at the front end of the cargo box; wherein the TRU includes: a controller (160); a flow motivator (170); an evaporator coil (185); a first temperature sensor (305A) mounted near the evaporator coil; and a second temperature sensor (305B) mounted within the cargo box; wherein the controller is configured to cycle the flow motivator between an on-phase when a cargo box temperature is at or above an upper setpoint and an off-phase when the cargo box temperature is at a lower setpoint; and wherein following a defrost event that defrosts the evaporator coil, the controller is configured to monitor the second temperature sensor for determining when to transition between the on-phase and the off-phase, until a stable condition of the first sensor is determined.

## Description

### BACKGROUND

The embodiments described herein are directed to transportation refrigeration units and more specifically to a transportation refrigeration unit configured to conserve energy utilized for compressor cycles after a defrost event.

Defrosting of an evaporator coil is one function of a transportation refrigeration unit (TRU). Such defrosting may be performed utilizing an electric heater. Due to inertia of the electric heater, and typical positioning of a temperature sensor near the evaporator coil, the on-off cycle of the compressor immediately following a defrost event may function inefficiently. That is, the compressor may be controlled to start before the temperature in the cargo box reaches an upper setpoint, which will impact the energy efficiency of the TRU engine.

### BRIEF SUMMARY

According to a first aspect of the invention there is provided a transportation refrigeration system, including: a cargo box extending from a front end to an aft end; a transportation refrigeration unit (TRU) at the front end of the cargo box; wherein the TRU includes: a controller; a flow motivator; an evaporator coil; a first temperature sensor mounted near the evaporator coil; and a second temperature sensor mounted within the cargo box; wherein the controller is configured to cycle the flow motivator between an on-phase when a cargo box temperature is at or above an upper setpoint and an off-phase when the cargo box temperature is at a lower setpoint; and wherein following a defrost event that defrosts the evaporator coil, the controller is configured to monitor the second temperature sensor for determining when to transition between the on-phase and the off-phase, until a stable condition of the first sensor is determined.

The stable condition may be determined when a predetermined time is elapsed.

The stable condition may be determined when the controller determines that readings from the first temperature sensor are accurate within a threshold.

When the controller is unable to confirm that readings from the first temperature sensor are accurate within a threshold, the controller may be configured to monitor the first temperature sensor for determining when to transition between the on-phase and the off-phase.

The system may include an electric heater disposed adjacent to the evaporator coil, wherein the electric heater may be operationally coupled to the controller and energized during the defrost event.

The flow motivator may be a compressor.

The TRU may include an engine, a generator powered by the engine that delivers electric power to the TRU, an expansion valve, and a condenser coil.

The system may include an air chute located in the cargo box, and a secondary evaporator coil may be located in the air chute.

The system may include an energy storage system (ESS), stowed under the cargo box, that is operationally coupled to the controller and supplements power delivered by the generator.

The system may include a regenerative braking system and the ESS is recharged via the regenerative braking system or grid power.

According to a second aspect of the invention there is provided a method of operating a transportation refrigeration system, including: cycling, by a controller of a transportation refrigeration unit (TRU) located at a front end of a cargo box, a flow motivator of the TRU between an on-phase when a cargo box temperature is at or above an upper setpoint and an off-phase when the cargo box temperature is at a lower setpoint, wherein the TRU further includes: an evaporator coil; a first temperature sensor mounted near the evaporator coil; and a second temperature sensor mounted within the cargo box; and monitoring, by the controller, the second temperature sensor following a defrost event that defrosts the evaporator coil, for determining when to transition between the on-phase and the off-phase, until a stable condition of the first sensor is determined.

The method may include determining there is a stable condition when a predetermined time has elapsed.

The method may include determining there is a stable condition when readings from the first temperature sensor are accurate within a threshold.

The method may include monitoring the first temperature sensor for determining when to transition between the on-phase and the off-phase when unable to confirm that readings from the first temperature sensor are accurate within a threshold.

The method may include energizing an electric heater, operationally coupled to the controller and disposed adjacent to the evaporator coil, during the defrost event.

The flow motivator may be a compressor.

The TRU may include an engine, a generator powered by the engine that delivers electric power to the TRU, an expansion valve, and a condenser coil.

An air chute may be located in the cargo box, and a secondary evaporator coil may be located in the air chute.

The method may include supplementing power delivered by the generator with an energy storage system (ESS) that is operationally coupled to the controller and stowed under the cargo box.

The method may include recharging the ESS via a regenerative braking system or grid power.

### BRIEF DESCRIPTION OF THE DRAWINGS

The present disclosure is illustrated by way of example and not limited to the accompanying figures in which like reference numerals indicate similar elements.
FIG. 1A shows a transportation refrigeration system configured to conserve energy utilized for compressor on-off cycles after a defrost event;
FIG. 1B is a rear perspective view of the transportation refrigeration unit;
FIG. 2A shows details of a transportation refrigeration unit (TRU) of the disclosed system in a front view;
FIG. 2B shows details of a transportation refrigeration unit (TRU) of the disclosed system in a rear view;
FIG. 3 is a graph showing operation of a compressor of the TRU utilizing a temperature sensor located at an evaporator coil and not utilizing a temperature sensor within the cargo box, resulting in premature operation of the compressor after a defrost event;
FIG. 4 is a graph showing operation of a compressor of the TRU utilizing a temperature sensor located at an evaporator coil and a temperature sensor within the cargo box, resulting in a desired operation of the compressor after a defrost event; and
FIG. 5 is a flowchart showing a method of operating a transportation refrigeration system to conserve energy utilized for compressor on-off cycles after a defrost event.

### DETAILED DESCRIPTION

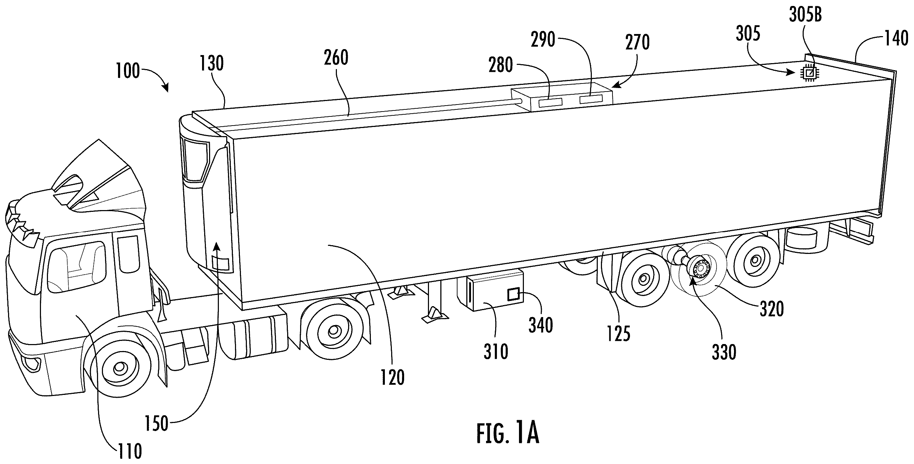

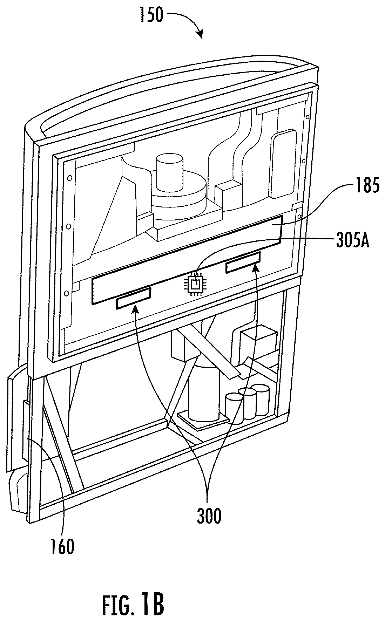

Turning to FIGS. 1A and 1B, a transport refrigeration system 100 is shown. The system 100 includes a truck 110 that hauls a cargo box 120, such as a refrigerated shipping container supported on a trailer 125. The cargo box 120 extends from a front end 130 to an aft end 140. The front end 130 of the cargo box 120 includes a transportation refrigeration unit (TRU) 150. Reference to the front and aft ends are disclosed herein for relative positioning only and do not refer to the actual front (i.e., close to the truck 110). Further, the disclosed embodiments are applicable to containers, a first end of such container having the TRU 150.

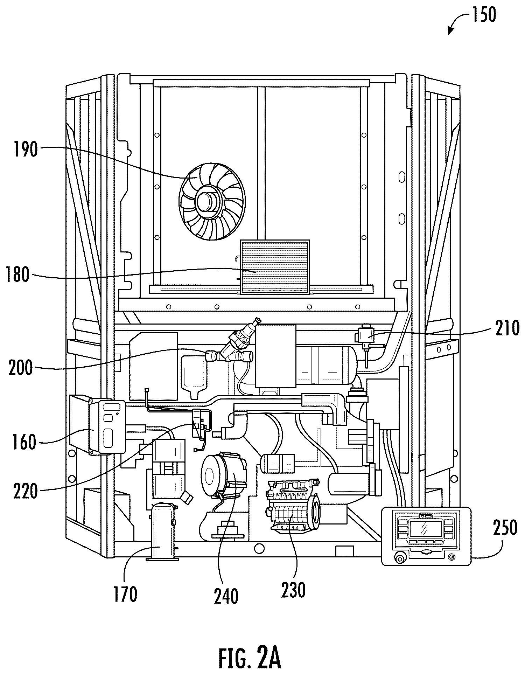

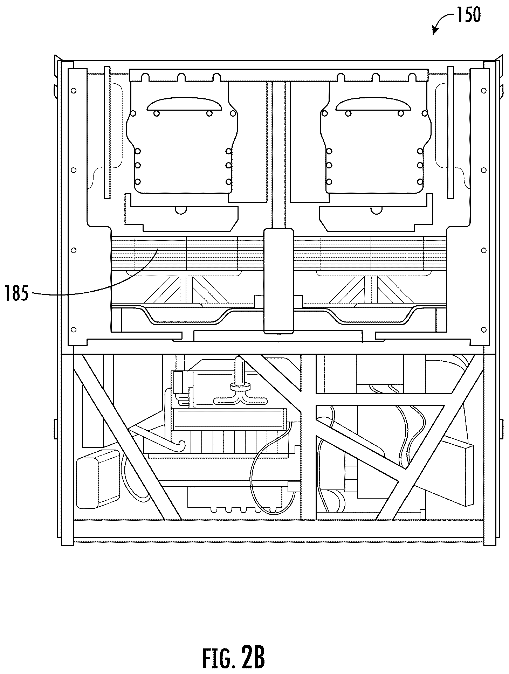

As shown in FIGS. 2A and 2B, the TRU 150 includes a controller 160. The controller 160 may be an electronics controller, with an internal processor and non-transitory memory, and the controller 160 may use a CAN-bus communications, as a non-limiting embodiment. A flow motivator 170 of the TRU 150 may be a compressor that pushes a flow of refrigerant through the system. The TRU 150 may also have a condenser coil 180, which may be a microchannel condenser coil, that is accompanied by a fan 190. An evaporator coil 185 is shown in FIG.2B. A suction modulation valve 200 of the TRU 150 may control the flow of refrigerant gas into the compressor 170 to regulate temperature control and compressor power. The TRU 150 may also have an expansion valve 210 and an economizer 220 that acts as an evaporator to more precisely control the temperature and flow of the refrigerant entering a main evaporator (discussed below). An engine 230 of the TRU 150 is controlled by the controller 160 and powers a generator 240 to produce electricity that powers the electrical components of the TRU 150. A user interface 250 of the TRU 150 enables a user to access information stored in the controller 160 and engage user provided controls.

Turning back to FIGS. 1A and 1B, the system 100 may include cooling tubes 260 that lead from the primary refrigeration unit (FIG. 1B) to an air chute 270 within the cargo box 120. The air chute 270 includes a secondary evaporator coil 280 and a blower 290. The cooling tubes 260 and air chute 270 are optional and may be replaced with a fan that blows cooled air supplied from the TRU 150 via a duct.

For defrosting the evaporator coil 185, the TRU 150 may have heating elements 300 located near, e.g., under the evaporator coil 185 and controlled by the controller 160. To control operation of the compressor 170, the system 100 may include a first temperature sensor (first sensor) 305A located at the evaporator coil 185and a second temperature sensor (second sensor) 305B located within the cargo box 120. Utilization of the sensors, generally referenced as 305, is discussed below. The sensors 305 may communicate with the controller 160 using wired or wireless protocols, discussed in greater detail below. The sensors 305 may be temperature sensors and more specifically return air temperature (RAT) sensors.

To provide supplemental electric power to the TRU 150, the system 100 may include an energy storage system (ESS) 310, with at least one battery, mounted under the cargo box 120. Wheels 320 may be equipped with a regenerative braking system 330, e.g., motors, that regeneratively capture energy which can be stored in the ESS 310. Alternatively, the ESS 310 may be charged on the grid, such as the U.S. or EU electric power grid, via an outlet 340 electrically coupled to the ESS 310.

It is to be appreciated that the compressor 170 is powered by the generator 240, which is powered by the engine 230. Lights and other relatively low powered electrical devices of the TRU 150, which may include the controller 160 and user interface 250, may run off the ESS 310. Thus, when the compressor 170 is not running, for reasons discussed below, the engine 230 may be turned off to conserve fuel.

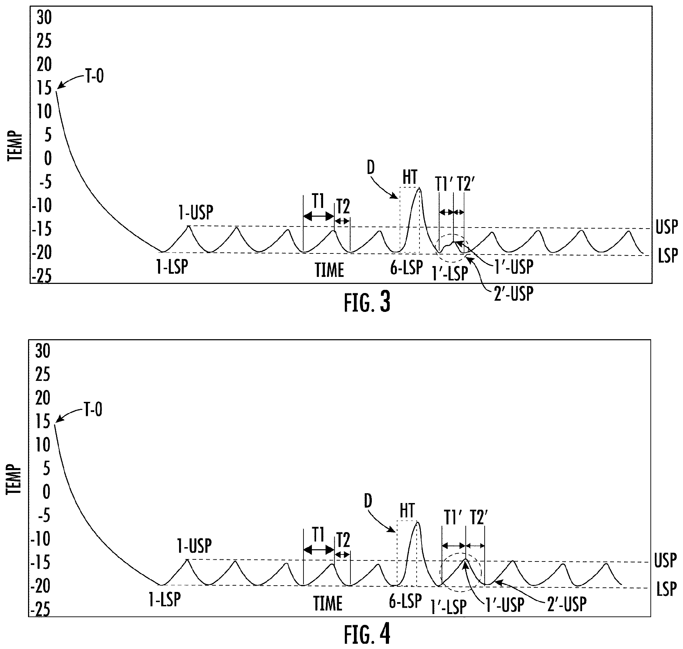

Turning to FIG. 3, the TRU 150, at the onset (T-0), may be in a cooling mode. In this mode, when the temperature in the cargo box 120 is relatively warm, the compressor 170 may be in an on-phase or mode, i.e., the compressor 170 may run until the temperature within the cargo box 120 first reaches a lower setpoint 1-LSP. Then the compressor 170 may switch by operation of the controller 160 to an off-phase until the temperature in the cargo box 120 raises and first reaches an upper set point 1-USP. Thereafter, the compressor 170 may be controlled to start and stop, e.g., execute on-off cycles, repeatedly for a predetermined time or through a predetermined cycles between the upper and lower setpoints USP/LSP until the controller 160 executes a defrost event D. That is, the controller 160 has the TRU 150 enter a defrost mode to defrost the evaporator coil 185. As illustrated, the defrost event D occurs after the sixth time the compressor 170 reaches the lower setpoint 6-LSP.

As seen in FIG. 3, each phase of the on-off cycle runs for approximately the same period until the defrost event D, at 6-LSP. That is, it takes a first period of time T1 during an off-phase of the compressor 170 for the cargo box 120 to raise in temperature from the lower setpoint LSP to the upper setpoint USP. It takes a second period T2 during an on-phase of the compressor 170 for the cargo box 120 to lower in temperature from the upper setpoint USP to the lower setpoint LSP. Off-phases may last approximately twenty to thirty minutes while on-phases may last ten to twenty minutes, as non-limiting examples.

FIG. 3 shows an operation of the system 100 where the second sensor 305B is not utilized by the controller 160 for determining the on-off operation of the compressor 170. The first sensor 305A is near the evaporator coil 185, as indicated. The controller 160 is configured to estimate the temperature in the cargo box 120 based on temperature readings from the first sensor 305A. During the defrost event D, which starts when the compressor 170 is off after the sixth time the cargo box temperature has reached the lower setpoint 6-LSP, the heater 300 is turned on to heat the evaporator coil 185. During this time, the temperature in the cargo box 120 may reach a relatively high temperature HT, e.g., that is greater than the upper setpoint USP because of the period required to defrost the evaporator coil 185.

When the evaporator coil 185 is defrosted, the compressor 170 is turned on, or set to the on-phase, and cargo box 120 is brought back to the low setpoint LSP for the first time after the defrost event D, at 1'-LSP. The compressor 170 is then stopped, or set to the off-phase, and the cargo box 120 is allowed to warm up to the upper setpoint USP for the first time since the defrost event D, at 1'-USP.

Inertia from the heater 300 at the evaporator coil 185 impacts the readings of the first sensor 305A and causes the controller 160 to determine that the temperature in the cargo box 120 is warmer than it is. The compressor 170 is turned on prematurely, before the upper set point USP is reached, at a time T1' that is less than T1. It takes the compressor 170 a time T2' that is less than T2 to cool the cargo box 120 to the lower setpoint LSP for the second time after the defrost event D, at 2'-LSP. The impact of the heater 300 eventually dissipates and the compressor 170 runs through the on-off cycles as intended. However, the premature starting and rapid stopping of the compressor 170 in the on-off cycle after the defrost cycle D, which requires running the generator 240 by the engine 230, results in an inefficient operation and a waste of fuel. Over time, as the defrost events are repeated, this waste can become impactful.

Turning to FIG. 4, the operation of the system is shown with the use of both sensors 305 for determining the on-off operation of the compressor 170. The first sensor 305A is near the evaporator coil 185, as indicated, and the second senor 305B is in the cargo box 120. As indicated, the controller 160 is configured to estimate the temperature in the cargo box 120 based on readings from the first sensor 305A.

During the defrost event D, which starts when the compressor 170 is in the off-phase after the sixth time the cargo box temperature has reached the lower setpoint 6-LSP, the temperature in the cargo box 120 is measured by the second sensor 305B. The heater 300 is then turned on to heat the evaporator coil 185. During this time, the temperature in the cargo box 120 may reach a relatively high temperature (HT), e.g., that is greater than the upper setpoint USP because of the period required to defrost the evaporator coil 185.

When the evaporator coil 185 is defrosted, the compressor 170 is turned on, or set to the on-phase, and cargo box 120 is brought back to the low setpoint LSP for the first time after the defrost event D, at 1'-LSP. The compressor 170 is then stopped, or set to the off-phase, and the cargo box 120 is allowed to warm up to the upper setpoint USP for the first time since the defrost event D, at 1'-USP. The temperature is monitored using the second sensor 305B so that temperature in the cargo box 120 actually reaches the upper setpoint USP. The duration it takes to reach that point T1' is aligned with the duration to reach the upper setpoint USP before the defrost event D. The compressor 170 is then set to the on-phase and the temperature in the cargo box 120 is brought to the lower setpoint LSP for the second time since the defrost event D, at 2'-LSP. The duration it takes to reach that point T2' is aligned with the duration to reach the lower setpoint LSP before the defrost event D. The temperature is monitored using the second sensor 305B so that temperature in the cargo box 120 actually reaches the lower setpoint LSP. Thus, the inefficiencies associated with using only the first sensor 305A, shown in FIG. 3, are avoided. At this time, which may be close to thirty or forty minutes or more after the defrost event D, the controller 160 again relies only on the first sensor 305A to control the on-off cycle of the compressor 170, until a next defrost event D.

In one embodiment, the controller 160 measures the duration of the on-off cycle of the compressor 170 after the defrost event D and compares the readings of the sensors 305 against each other. The controller 160 may continue to rely on the second sensor 305B until the readings are aligned with each other. Alternatively, the controller 160 may continue to rely on the second sensor 305B until the readings of the first sensor 305A after the defrost event D are aligned with readings of the first sensor 305A before the defrost event D. That is, the controller 160 determines the first sensor 305A is accurate within a threshold before relying on readings from the first sensor 305A to control the on-off cycle of the compressor 170.

As indicated above, during normal operation, both sensors 305 provide the same temperature readings. The first sensor 305A, located at the evaporator coil 185, is affected by residual heating from the heaters 300, which causes the on/off cycles to occur quickly immediately after the defrost event D if the second sensor 305B was not utilized. As a result, as indicated, in one embodiment the controller 160 uses logic that considers both sensors 305. The compressor 170 is run based on the second sensor 305B located inside the cargo box 120 until the sensors 305 are reading the same value, within a threshold, e.g., +/-0.1 or +/-0.2, or another predetermined/modified value. Then the controller 160 may rely exclusively on the first sensor 305A until the next defrost event D.

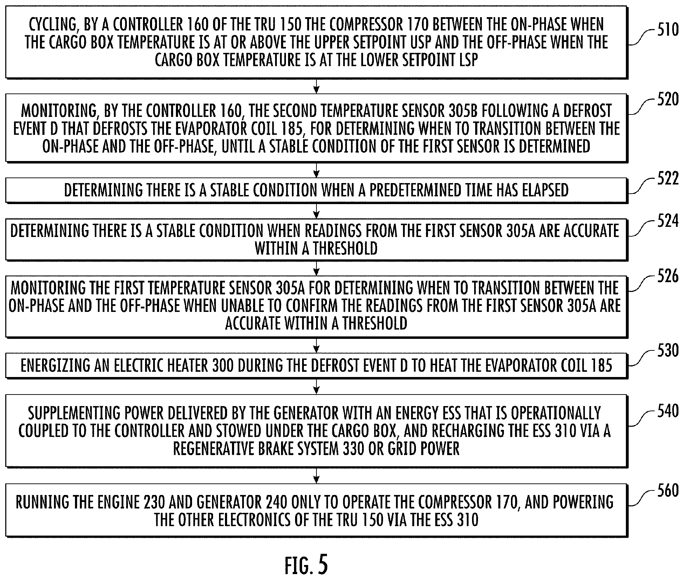

Turning to FIG. 5, a flowchart shows a method of operating a transport refrigeration system 100 to conserve energy utilized for compressor on-off cycles after a defrost event. As shown in block 510, the method includes cycling, by a controller 160 of the TRU 150 the compressor 170 between the on-phase when the cargo box temperature is at or above the upper setpoint USP and the off-phase when the cargo box temperature is at the lower setpoint LSP.

As shown in block 520, the method includes monitoring, by the controller 160, the second sensor 305B following a defrost event D that defrosts the evaporator coil 185, for determining when to transition between the on-phase and the off-phase until a stable condition of the first sensor is determined.

As shown in block 522, the method includes determining there is a stable condition when a predetermined time has elapsed.

As shown in block 524, the method includes determining there is a stable condition when readings from the first sensor 305A are accurate within a threshold.

As shown in block 526, the method includes monitoring the first sensor 305A for determining when to transition between the on-phase and the off-phase for the compressor 170 when unable to confirm that readings from the first temperature sensor 305A are accurate within a threshold.

As shown in block 530, the method includes energizing an electric heater 300 during the defrost event D to heat the evaporator coil 185. As shown in block 540, the method includes supplementing power delivered by the generator 240 with the ESS 310 and recharging the ESS 310 via a regenerative braking system 330 or grid power. As shown in block 550, the method includes running the engine 230 and generator 240 only to operate the compressor 170 and powering the other electronics of the TRU 150 via the ESS 310.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and LTE Category M1 internet of things (LTE Cat M1-IOT or LTE-M). Wireless communications for the disclosed systems may include cellular, e.g. 2G/3G/4G/5G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended to limit the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A transportation refrigeration system (100), comprising:
a cargo box (120) extending from a front end (130) to an aft end (140);
a transportation refrigeration unit, TRU, (150) at the front end of the cargo box;
wherein the TRU includes: a controller (160); a flow motivator (170); an evaporator coil (185); a first temperature sensor (305A) mounted near the evaporator coil; and a second temperature sensor (305B) mounted within the cargo box;
wherein the controller is configured to cycle the flow motivator between an on-phase when a cargo box temperature is at or above an upper setpoint and an off-phase when the cargo box temperature is at a lower setpoint; and
wherein following a defrost event that defrosts the evaporator coil, the controller is configured to monitor the second temperature sensor for determining when to transition between the on-phase and the off-phase, until a stable condition of the first sensor is determined.

2. The system of claim 1, wherein the stable condition is determined when a predetermined time is elapsed.

3. The system of claim 1 or 2, wherein the stable condition is determined when the controller determines that readings from the first temperature sensor are accurate within a threshold.

4. The system of any of the preceding claims, wherein when the controller is unable to confirm that readings from the first temperature sensor are accurate within a threshold, the controller is configured to monitor the first temperature sensor for determining when to transition between the on-phase and the off-phase.

5. The system of any of the preceding claims, comprising an electric heater (300) disposed adjacent to the evaporator coil, wherein the electric heater is operationally coupled to the controller and energized during the defrost event.

6. The system of any of the preceding claims, wherein the flow motivator is a compressor.

7. The system of any of the preceding claims, wherein the TRU includes an engine (230), a generator (240) powered by the engine that delivers electric power to the TRU, an expansion valve (210), and a condenser coil (180), optionally including an air chute (270) located in the cargo box, and secondary evaporator coil (280) is located in the air chute.

8. The system of any of the preceding claims, including an energy storage system, ESS, (310) stowed under the cargo box, that is operationally coupled to the controller and supplements power delivered by the generator, optionally including a regenerative braking system (330) and the ESS is recharged via the regenerative braking system or grid power.

9. A method of operating a transportation refrigeration system (100), comprising:
cycling, by a controller (160) of a transportation refrigeration unit, TRU, (150) located at a front end (130) of a cargo box (120), a flow motivator (170) of the TRU between an on-phase when a cargo box temperature is at or above an upper setpoint and an off-phase when the cargo box temperature is at a lower setpoint,
wherein the TRU further includes: an evaporator coil (185); a first temperature sensor (305A) mounted near the evaporator coil; and a second temperature sensor (305B) mounted within the cargo box; and
monitoring, by the controller, the second temperature sensor following a defrost event that defrosts the evaporator coil, for determining when to transition between the on-phase and the off-phase, until a stable condition of the first sensor is determined.

10. The method of claim 9, comprising determining there is a stable condition when a predetermined time has elapsed.

11. The method of claim 9 or 10, comprising determining there is a stable condition when readings from the first temperature sensor are accurate within a threshold.

12. The method of any of claims 9-11, comprising monitoring the first temperature sensor for determining when to transition between the on-phase and the off-phase when unable to confirm that readings from the first temperature sensor are accurate within a threshold.

13. The method of any of claims 9-12, comprising energizing an electric heater (300), operationally coupled to the controller and disposed adjacent to the evaporator coil, during the defrost event.

14. The method of any of claims 9-13, wherein the flow motivator is a compressor, optionally wherein the TRU includes an engine (230), a generator (240) powered by the engine that delivers electric power to the TRU, an expansion valve (210), and a condenser coil (180), and optionally wherein an air chute (270) located in the cargo box, and a secondary evaporator coil (280) is located in the air chute.

15. The method of any of claims 9-14, including supplementing power delivered by the generator with an energy storage system, ESS, (310) that is operationally coupled to the controller and stowed under the cargo box, optionally including recharging the ESS via a regenerative braking system (330) or grid power.
